Europäisches Patentamt

European Patent Office

Office européen des brevets

(19)

(11) **EP 1 325 936 A1**

(12) **EUROPEAN PATENT APPLICATION**

(43) Date of publication:
**09.07.2003 Bulletin 2003/28**

(51) Int Cl.[7]: **C08F 265/02**, C08F 267/02,
C08F 267/04

(21) Application number: **02258968.3**

(22) Date of filing: **24.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **07.01.2002 US 345228 P**

(71) Applicant: **ROHM AND HAAS COMPANY
Philadelphia, Pennsylvania 19106-2399 (US)**

(72) Inventors:
• **Blankenship, Robert Mitchell
  Harleysville, Pennsylvania 19438 (US)**
• **Bardman, James Keith
  Pennsylvania 18054 (US)**

(74) Representative: **Kent, Venetia Katherine
  Rohm and Haas (UK) Ltd
  European Operations Patent Dept.
  Lennig House
  2 Mason's Avenue
  Croydon, CR9 3NB (GB)**

(54) **Process for preparing emulsion polymers and polymers formed therefrom**

(57) A process for preparing multi-stage emulsion polymers is provided. The process is capable of producing multi-stage emulsion polymers having low dry-bulk density. These polymers are useful in coating compositions such as paints and paper coatings.

**Description**

The present invention relates to a process for preparing emulsion polymers and polymers formed therefrom. In particular, the present invention relates to an aqueous emulsion polymerization process for preparing multistage emulsion polymers, the polymers formed thereby containing, when dry, at least one void.

Voided or hollow emulsion polymers, are used in several industrial arenas. These polymers are often used in paints, coatings, inks, sunscreens and paper manufacture. Hollow emulsion polymers are generally prepared by swelling a core/shell emulsion polymer in such a way that one or more voids form in the interior of the emulsion polymer particle. In one such process the core of a core/shell emulsion polymer is swollen by a hard base. The voids contribute, among other things, to the opacity of coatings and films prepared with the hollow emulsion polymer

US Patent No. 4,594,363 discloses a process for making core/sheath polymer particles containing voids including the step of swelling at elevated temperature the resultant core/sheath polymer particles with fixed or permanent base so as to produce a dispersion of particles which, when dried, contain a microvoid.

US Patent No. 5,229,209 discloses a process for the manufacture of core/shell polymer particles including the step of swelling the particle with a non-volatile alkali to generate one or more vesicles.

The present invention provides an improved process for preparing voided emulsion polymers. In prior processes for the preparation of multistage particles capable of forming at least one void in the particle, when dry, it has been observed generally that the higher the extent of neutralization of the core polymer with a hard base, the lower the dry bulk density of the polymer which correlates with increased average void volume in the emulsion polymer particles, but the higher the gel content of the multistage emulsion polymer. It is a feature of the improved process of the first and second aspect of the present invention, and a measure of the improvement afforded by the present invention, that the tradeoff between dry bulk density and lower gel content is beneficially altered, namely that a lower dry density may be provided at equal gel content or equal dry density may be provided at lower gel content, or lower dry density may be provided at lower gel content, compositional and other process conditions being equal.

In a first aspect of the present invention, there is provided a process for preparing emulsion polymer particles comprising: a) forming a multi-stage emulsion polymer, comprising a core stage polymer and a shell stage polymer, wherein the core stage polymer comprises, as polymerized units, from 5 to 100% by weight, based on the weight of the core stage polymer, of hydrophilic monoethylenically unsaturated monomer, and from 0 to 95% by weight, based on the weight of the core stage polymer, of at least one nonionic monoethylenically unsaturated monomer; and wherein the shell stage polymer comprises, as polymerized units, at least 50% by weight of nonionic monoethylenically unsaturated monomer; and b) contacting the multi-stage emulsion polymer with from 0.75 to 1.5 moles hard base per mole of the core polymer acid and from 0.05 to 0.5 moles soft base per mole of the core polymer acid.

In a second aspect of the present invention, there is provided a process for preparing emulsion polymer particles comprising: a) forming a multi-stage emulsion polymer, comprising a core stage polymer and a shell stage polymer, wherein the core stage polymer comprises, as polymerized units, from 5 to 100% by weight, based on the weight of the core stage polymer, of hydrophilic monoethylenically unsaturated monomer, and from 0 to 95% by weight, based on the weight of the core stage polymer, of at least one nonionic monoethylenically unsaturated monomer; and wherein the shell stage polymer comprises, as polymerized units, at least 50% by weight of nonionic monoethylenically unsaturated monomer; b) adding an effective amount of one or more polymerization inhibitors or reducing agents to substantially stop any polymerization; c) providing monomer at a level of at least 0.5% by weight based on the weight of the multi-stage emulsion polymer; d) adding from 0.75 to 1.5 moles hard base per mole of the core polymer acid and from 0.05 to 0.5 moles soft base per mole of the core polymer acid; and e) reducing the level of monomer by at least 50% by weight.

In a third aspect of the present invention there is provided a core/shell polymer particle formed by the process of claim 1 or claim 2, the particle containing, when dry, at least one void.

The stages of the multi-stage polymers of the present invention include core stage polymer (the "core"), and shell stage polymer (the "shell"). The core and shell may themselves be comprised of more than one stage. There may also be one or more intermediate stages. Preferably, the multi-stage polymer comprises a core, an intermediate layer and a shell.

The cores of the multi-stage polymers of the present invention are emulsion polymers comprising, as polymerized units, from 5 to 100% by weight, based on the weight of the core, of at least one hydrophilic monoethylenically unsaturated monomer and from 0 to 95% by weight, based on the weight of the core stage polymer, of at least one nonionic monoethylenically unsaturated monomer.

Cores containing at least 5% by weight, based on the total weight of the core polymer, of at least one hydrophilic monoethylenically unsaturated monomer will generally result in a suitable degree of swelling. There may be instances wherein, because of the hydrophobicity of certain comonomers or combinations thereof in conjunction with the hydrophobic/hydrophilic balance of a particular hydrophilic monomer, the copolymer may be suitably prepared with less than 5% by weight, based on the total weight of the core polymer, of a hydrophilic monoethylenically unsaturated monomer.

Preferably, the core comprises, as polymerized units, hydrophilic monoethylenically unsaturated monomer at a level of from 5% to 100%, more preferably, from 20% to 60%, and most preferably, from 30% to 50% by weight based on the total weight of the core. The hydrophilic core polymer may be made in a single stage or step of the sequential polymerization or may be made by a plurality of steps in sequence.

The multi-stage emulsion polymer of the present invention contemplates a core polymer wherein at least one hydrophilic monoethylenically unsaturated monomer is polymerized alone or with at least one nonionic monoethylenically unsaturated monomer. This process also contemplates, and includes in the term "hydrophilic monoethylenically unsaturated monomer," the use of a nonpolymeric compound containing at least one carboxylic acid group which absorbed into the core polymer before, during or after the polymerization of the hydrophobic shell polymer as a replacement for the hydrophilic monoethylenically unsaturated monomer in the hydrophilic core polymer, as described in U.S. Pat. 4,880,842. In addition, this invention contemplates, and includes in the term "hydrophilic monoethylenically unsaturated monomer," the use of a latent hydrophilic core polymer which contains no hydrophilic monoethylenically unsaturated monomer but which is swellable upon hydrolysis to a hydrophilic core polymer as described in U.S. Pat. Nos. 5,041,464; 5,157,084; and 5,216,044.

Suitable hydrophilic monoethylenically unsaturated monomers useful for making the core polymer include monoethylenically unsaturated monomers containing acid-functionality such as, for example, monomers containing at least one carboxylic acid group including acrylic acid, methacrylic acid, acryloxypropionic acid, (meth)acryloxypropionic acid, itaconic acid, aconitic acid, maleic acid or anhydride, fumaric acid, crotonic acid, monomethyl maleate, monomethyl fumarate, and monomethyl itaconate; also contemplated is the use of terminally unsaturated acid-containing oligomers such as, for example, are taught in US patents No. 5,710,227 and 6,046,278 and EP 1010706, and including comb/graft, block, and mixed block oligomers. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. Acrylic acid and methacrylic acid are preferred.

Suitable nonpolymeric compounds containing at least one carboxylic acid group include $C_6$-$C_{12}$ aliphatic or aromatic monocarboxylic acids and dicarboxylic acids, such as benzoic acid, m-toluic acid, p-chlorobenzoic acid, o-acetoxybenzoic acid, azelaic acid, sebacic acid, octanoic acid, cyclohexanecarboxylic acid, lauric acid and monobutyl phthalate and the like.

Suitable nonionic monoethylenically unsaturated monomers for making the hydrophilic core polymer include styrene, $\alpha$-methyl styrene, p-methyl styrene, t-butyl styrene, vinyltoluene, ethylene, vinyl acetate, vinyl chloride, vinylidene chloride, (meth)acrylonitrile, (meth)acrylamide, ($C_1$-$C_{20}$) alkyl or ($C_3$-$C_{20}$) alkenyl esters of (meth)acrylic acid, such as methyl (meth)acrylate, ethyl (meth)acrylate, butyl (meth)acrylate, 2-ethylhexyl (meth)acrylate, hydroxyethyl (meth)acrylate, hydroxypropyl(meth)acrylate, benzyl (meth)acrylate, lauryl (meth)acrylate, oleyl (meth)acrylate, palmityl (meth)acrylate, stearyl (meth)acrylate and the like.

The core, whether obtained by a single stage process or a process involving several stages, has an average particle size of from 50 nm to 1.0 micron, preferably from 100 nm to 300 nm, diameter in unswollen condition. If the core is obtained from a seed polymer, the seed polymer preferably has an average particle size of from 30 nm to 200 nm.

The core may also optionally contain less than 20% by weight, preferably from 0.1 to 3% by weight, based on the total weight of the core, of polyethylenically unsaturated monomer, wherein the amount used is generally approximately directly proportional to the amount of hydrophilic monoethylenically unsaturated monomer used; in other words, as the relative amount of hydrophilic monomer increases, it is acceptable to increase the level of polyethylenically unsaturated monomer. Alternatively, the core polymer may contain from 0.1 to 60 % by weight, based on the total weight of the core polymer, of butadiene.

Suitable polyethylenically unsaturated monomers include comonomers containing at least two addition polymerizable vinylidene groups and are alpha beta ethylenically unsaturated monocarboxylic acid esters of polyhydric alcohols containing 2-6 ester groups. Such comonomers include alkylene glycol diacrylates and dimethacrylates, such as for example, ethylene glycol diacrylate, ethylene glycol dimethacrylate, 1,3-butylene glycol diacrylate, 1,4-butylene glycol diacrylate propylene glycol diacrylate and triethylene glycol dimethylacrylate; 1,3-glycerol dimethacrylate; 1,1,1-trimethylol propane dimethacrylate; 1,1,1-trimethylol ethane diacrylate; pentaerythritol trimethacrylate; 1,2,6-hexane triacrylate; sorbitol pentamethacrylate; methylene bis-acrylamide, methylene bis-methacrylamide, divinyl benzene, vinyl methacrylate, vinyl crotonate, vinyl acrylate, vinyl acetylene, trivinyl benzene, triallyl cyanurate, divinyl acetylene, divinyl ethane, divinyl sulfide, divinyl ether, divinyl sulfone, diallyl cyanamide, ethylene glycol divinyl ether, diallyl phthalate, divinyl dimethyl silane, glycerol trivinyl ether, divinyl adipate; dicyclopentenyl (meth)acrylates; dicyclopentenyloxy (meth)acrylates; unsaturated esters of glycol monodicyclopentenyl ethers; allyl esters of ???- unsaturated mono- and dicarboxylic acids having terminal ethylenic unsaturation including allyl (meth)acrylate, diallyl maleate, diallyl fumarate, diallyl itaconate and the like.

The multi-stage polymer of the present invention preferably contains an intermediate stage. The intermediate stage polymer, when present, partially or fully encapsulates the core and itself is partially or fully encapsulated by the shell. The intermediate stage is prepared by conducting an emulsion polymerization in the presence of the core.

The intermediate stage preferably contains, as polymerized units, from 0.3 to 20, more preferably from 0.5 to 10% by weight, based on the weight of the core, of at least one hydrophilic monoethylenically unsaturated monomer. The intermediate stage preferably contains, as polymerized units, from 80 to 99.7%, more preferably from 90 to 99.5% by weight, based on the weight of the intermediate stage, of at least one nonionic monoethylenically unsaturated monomer. The hydrophilic monoethylenically unsaturated monomers and the nonionic monoethylenically unsaturated monomers useful for making the core are also useful for making the intermediate layer.

The shell of the multi-staged polymer of this invention is the product of emulsion polymerizing at least 50%, preferably from 80% to 100%, more preferably from 90% to 100%, by weight, based on the total weight of the shell, of at least one nonionic monoethylenically unsaturated monomer. The nonionic monoethylenically unsaturated monomers suitable for the core are also suitable for the shell. Styrene is preferred.

The shell may also contain, as polymerized units, less than 50%, preferably from 0% to 20%, more preferably from 0% to 10%, by weight based on the weight of the shell, of one or more monoethylenically unsaturated monomers containing acid-functionality for making the hydrophobic polymer shell include acrylic acid, methacrylic acid, acryloxypropionic acid, (meth)acryloxypropionic acid, itaconic acid, aconitic acid, maleic acid, maleic anhydride, fumaric acid, crotonic acid, monomethyl maleate, monomethyl fumarate, monomethyl itaconate and the like. Acrylic acid and methacrylic acid are preferred.

The monomers used and the relative proportions thereof in the shell should be such that it is permeable to a hard or soft base swelling agent capable of swelling the core. Monomeric mixtures for making the shell preferably contain from 0% by weight to about 10% by weight, based on the total weight of the shell polymer, of an acid-functional monoethylenically unsaturated monomer. Preferably, the proportion of acid-functional monoethylenically unsaturated monomer in the shell polymer does not exceed one-third the proportion thereof in the core polymer.

The presence of acid-functional monoethylenically unsaturated monomer in the shell polymer may serve several functions:

(1) stabilizing of the final multi-stage emulsion polymer;
(2) assuring permeability of the shell to a swelling agent; and
(3) compatibilizing the shell with the previously formed stage of the multistage emulsion polymer.

As used herein, the term "sequentially emulsion polymerized" or "sequentially emulsion produced" refers to polymers (including homopolymers and copolymers) which are prepared in aqueous medium by an emulsion polymerization process in the presence of the dispersed polymer particles of a previously formed emulsion polymer such that the previously formed emulsion polymers are increased in size by deposition thereon of emulsion polymerized product of one or more successive monomer charges introduced into the medium containing the dispersed particles of the preformed emulsion polymer.

In the sequential emulsion polymerization with which the present invention is concerned, the term "seed" polymer is used to refer to an aqueous emulsion polymer dispersion which may be the initially-formed dispersion, that is, the product of a single stage of emulsion polymerization or it may be the emulsion polymer dispersion obtained at the end of any subsequent stage except the final stage of the sequential polymerization. Thus, a hydrophilic core polymer which is herein intended to be encapsulated by one or more subsequent stages of emulsion polymerization may itself be termed a seed polymer for the next stage.

The process of this invention contemplates that the core, the intermediate stage, the shell, or any combination thereof may be made in a single stage or step of the sequential polymerization or may be made by a plurality of steps in sequence following the polymerization. The first stage of emulsion polymerization in the process of the present invention may be the preparation of a seed polymer containing small dispersed polymer particles insoluble in the aqueous emulsion polymerization medium. This seed polymer may or may not contain any hydrophilic monomer component but provides particles of minute size which form the nuclei on which the hydrophilic core polymer, with or without nonionic comonomer, is formed.

A water-soluble free radical initiator is utilized in the aqueous emulsion polymerization. Suitable water-soluble free radical initiators include hydrogen peroxide; tert-butyl peroxide; alkali metal persulfates such as sodium, potassium and lithium persulfate; ammonium persulfate; and mixtures of such initiators with a reducing agent. Reducing agents include: sulfites, such as alkali metal metabisulfite, hydrosulfite, and hyposulfite; sodium formaldehyde sulfoxylate; and reducing sugars such as ascorbic acid and isoascorbic acid. The amount of initiator is preferably from 0.01 to 3 % by weight, based on the total amount of monomer and in a redox system the amount of reducing agent is preferably from 0.01 to 3 % by weight based on the total amount of monomer. The temperature may be in the range of about $10°C$ to $100°C$. In the case of the persulfate systems, the temperature is preferably in the range of $60°C$ to $90°C$. In the redox system, the temperature is preferably in the range of $30°C$ to $70°C$. The type and amount of initiator may be the same or different in the various stages of the multi-stage polymerization.

One or more nonionic or anionic emulsifiers, or surfactants, may be used, either alone or together. Examples of suitable nonionic emulsifiers include tert-octylphenoxyethylpoly(39)-ethoxyethanol, dodecyloxypoly(10)ethoxyethanol, nonylphenoxyethyl-poly(40)ethoxyethanol, polyethylene glycol 2000 monooleate, ethoxylated castor oil, fluorinated alkyl esters and alkoxylates, polyoxyethylene (20) sorbitan monolaurate, sucrose monococoate, di(2-butyl)phenoxypoly(20) ethoxyethanol, hydroxyethylcellulosepolybutyl acrylate graft copolymer, poly(ethylene oxide)poly(butyl acrylate) block copolymer, block copolymers of propylene oxide and ethylene oxide, 2,4,7,9-tetramethyl-5-decyne-4,7-diol ethoxylated with 30 moles of ethylene oxide, N-polyoxyethylene(20)lauramide, N-lauryl-N-polyoxyethylene(3)amine and poly(10)ethylene glycol dodecyl thioether. Examples of suitable anionic emulsifiers include sodium lauryl sulfate, sodium dodecylbenzenesulfonate, potassium stearate, sodium dioctyl sulfosuccinate, sodium dodecyldiphenyloxide disulfonate, nonylphenoxyethylpoly(1)ethoxyethyl sulfate ammonium salt, sodium styrene sulfonate, sodium dodecyl allyl sulfosuccinate, linseed oil fatty acid, sodium or ammonium salts of phosphate esters of ethoxylated nonylphenol, sodium octoxynol-3-sulfonate, sodium cocoyl sarcocinate, sodium 1-alkoxy-2-hydroxypropyl sulfonate, sodium alpha-olefin ($C_{14}$-$C_{16}$)sulfonate, sulfates of hydroxyalkanols, tetrasodium N-(1,2-dicarboxy ethyl)-N-octadecylsulfosuccinamate, disodium N-octadecylsulfosuccinamate, disodium alkylamido polyethoxy sulfosuccinate, disodium ethoxylated nonylphenol half ester of sulfosuccinic acid and the sodium salt of tert-octylphenoxyethoxypoly(39) ethoxyethyl sulfate.

The one or more surfactants are generally used at a level of from 0 to 3 % based on the weight of the multi-stage polymer. The one or more surfactants can be added prior to the addition of any monomer charge, during the addition of a monomer charge or a combination thereof. In certain monomer/emulsifier systems for forming the shell, the tendency to produce gum or coagulum in the reaction medium may be reduced or prevented by the addition of about 0.05% to about 2.0% by weight, based on total weight of the shell polymer, of emulsifier without detriment to the deposition of the polymer formed on the previously formed core particles.

The amount of emulsifier may be zero, in the situation wherein a persulfate initiator is used, to 3 % by weight, based on the weight of total weight of the core polymer. By carrying out the emulsion polymerization while maintaining low levels of emulsifier, the subsequent stages of polymer-formation deposit the most-recently formed polymer on the existing dispersed polymer particles resulting from the preceding step or stage. As a general rule, the amount of emulsifier should be kept below that corresponding to the critical micelle concentration for a particular monomer system, but while this limitation is preferable and produces a unimodal product, it has been found that in some systems the critical micelle concentration of the emulsifier may be exceeded somewhat without the formation of an objectionable or excessive number of dispersed micelles or particles. It is for the purpose of controlling the number of micelles during the various stages of polymerization so that the deposition of the subsequently formed polymer in each stage occurs upon the dispersed micelles or particles formed in the previous stages, that the concentration of emulsifier is kept low.

The viscosity- average molecular weight of the polymer formed in a given stage may range from 100,000, or lower if a chain transfer agent is used, to several million molecular weight. When 0.1% by weight to 20% by weight, based on the weight of the monomer, of a polyethylenically unsaturated monomer mentioned hereinbefore is used in making the core, the molecular weight is increased whether or not crosslinking occurs. The use of the polyethylenically unsaturated monomer reduces the tendency of the core polymer to dissolve when the multistaged polymer is treated with a swellant for the core. If it is desired to produce a core having a molecular weight in the lower part of the range, such as from 500,000 down to as low as about 20,000, it is frequently most practical to do so by avoiding the polyethylenically unsaturated monomers and using a chain transfer agent instead, such as 0.05% to 2% or more thereof, examples being alkyl mercaptans, such as sec-butyl mercaptan.

The weight ratio of core to the intermediate stage, if present, is generally in the range of from 1:0.5 to 1:10, preferably in the range of from 1:1 to 1:7. The weight ratio of core to shell is generally in the range of from 1:5 to 1:20, preferably in the range of from 1:8 to 1:15. The amount of polymer deposited to form shell polymer is generally such as to provide an overall size of the multistage polymer particle of from 70 nm to 4.5 microns, preferably from 100 nm to 3.5 microns, more preferably from 200 nm to 2.0 microns, in unswollen condition (that is, before any neutralization to raise the pH to about 6 or higher) whether the shell polymer is formed in a single stage or in a plurality of stages. In order to minimize the dry density of the final product, it is preferable to deposit only as much shell polymer as is needed to fully encapsulate the core. When the hydrophilic core polymer is fully encapsulated, it does not titrate with alkali metal bases under normal analytical conditions of about 1 hour and at room temperature. The extent of encapsulation can be determined by removing samples during the course of the shell polymerization and titrating with sodium hydroxide.

The core/shell polymer is contacted with a hard base and a soft base. Suitable swelling agents include, are those which, in the presence of the multistage emulsion polymer and monomer, are capable of permeating the shell and swelling the core. By "hard base" herein is meant a nonvolatile permanent or fixed base such as a metal hydroxide such as, for example, sodium hydroxide, potassium hydroxide, lithium hydroxide, strontium hydroxide, barium hydroxide. Preferred are sodium hydroxide and potassium hydroxide. By "soft base" herein is meant a base having a pKb<7 (in water at 25 °C) including ammonia, ammonium hydroxide, and amines, such as, for example, methylamine (pKb=3.4), dimethylamine (pKb=3.2), trimethylamine (pKb=4.2), ethylamine (pKb=3.4), diethylamine (pKb=4.5), triethylamine (pKb=3.3), ethanolamine (pKb=4.5), triethanolamine (pKb=6.2), propylamine (pKb=3.4), butylamine (pKb=3.2), hexylamine (pKb=3.4), benzylamine (pKb=4.7), dibutylamine (pKb=2.75), octylamine (pKb=3.35), 1,2 propanediamine (pKb=4.2), 1,4 butanediamine (pKb=3.2), hexamethylenediamine (pKb=2.1), morpholine (pKb=5.7), pyrrolidine (pKb=2.7), piperidine (pKb=2.9); and salts of weak acids such as, for example, sodium carbonate, potassium carbonate, sodium bisulfite, sodium phosphite, and ammonium carbonate. Preferred is sodium carbonate. The ratio of hard base to core polymer acid on an molar basis is from 0.75 to 1.5. The ratio of soft base to core polymer acid on an molar basis is from 0.05 to 0.5, more preferably from 0.1 to 0.3. Solvents, such as, for example, ethanol, hexanol, octanol, Texanol® solvent and those described in U.S. Patent 4,594,363, may be added to aid in fixed or permanent base penetration. The hard base and the soft base may be admixed with the multistage emulsion polymer in either order, in various programmed sequences, simultaneously as two spatially separated streams or mixed together. It is preferable to add the one or more swelling agents to the multistage emulsion polymer while the multistage emulsion polymer is at an elevated temperature, preferably at a temperature within 10°C of the shell polymerization temperature.

The core polymer of the multistage emulsion polymer swells when the core is subjected to a basic swelling agent that permeates the shell to at least partially neutralize the hydrophilic-functionality of the core, preferably to a pH of at least about 6 to at least about 10, and thereby result in swelling by hydration of the hydrophilic core polymer. The swelling, or expansion, of the core may involve partial merging of the outer periphery of the core into the pores of the inner periphery of the shell and also partial enlargement or bulging of the shell and the entire particle overall.

In an alternative embodiment the hydrophilic core polymer, when the aqueous polymeric dispersion is neutralized with a hard base and a soft base, may be swollen to an extent that the fully encapsulating shell is ruptured which provides a particle with at least one pore communicating between the surface of the particle and the interior, i. e., core or void, of the particle, according to the teachings of US Patent No. 5,527,613. In another alternative embodiment a particle formed according to the teachings of US Patent No. 5,409,776 may include a hydrophilic core polymer substantially but incompletely encapsulated by a shell polymer. In that case, the polymer may be swollen to provide a particle with at least one pore communicating between the surface of the particle and the interior, i.e., core or void, of the particle. An additional embodiment is contemplated wherein multiple cores are provided in a multistaged polymer particle which provides a particle containing, when dry, multiple voids. Further contemplated is a multistaged polymer wherein the core polymer is a precursor to the acid-functionality containing core polymer of this invention and is subsequently converted to the acid-functionality containing core polymer of this invention by means such as hydrolysis of the core polymer according to the teachings of US Patent Nos. 5,041,464; 5,157,084; and 5,216,044, whether before, during, or after shell polymer formation and the core polymer is contacted with a hard base and a soft base, separately or mixed, during or after the hydrolysis.

The multi-stage emulsion polymer is prepared by sequential emulsion polymerization, which, as discussed above, includes charging the monomers which form the shell. At, or near, the conclusion of charging the monomers which form the shell, the contents of the reactor include the multistage polymer, water and unreacted monomer. Under the conditions of an emulsion polymerization, there is also an appreciable free-radical content, or radical flux, which keeps the polymerization process going. Even if no additional monomer or initiator is added, there is an appreciable free-radical content in the system. When there is no appreciable free-radical content, in other words, when the radical flux is very low or approaches zero, then no substantial amount of polymerization will occur. In the second aspect of the present invention an aqueous emulsion of the multi-stage emulsion polymer, monomer, and hard and soft base are provided under conditions wherein there is no substantial polymerization of the monomer, so as to enhance the extent of swelling of the multistage emulsion polymer.

There are many means for providing that no substantial polymerization of monomer is occurring, including the addition of one or more polymerization inhibitors, the addition of one or more reducing agents, waiting for a sufficient period of time until there are no longer an appreciable number of free-radicals by virtue of them terminating, cooling the contents of the reactor to limit the reactivity of the free-radicals, and combinations thereof as is taught in US Patents No. 6,020,435 and 6,252,004. A preferred means involves the addition of one or more polymerization inhibitors such as, for example, N, N-diethylhydroxylamine, N-nitrosodiphenylamine, 2,4-dinitrophenylhydrazine, p-phenylenediamine, phenathiazine, alloocimene, triethyl phosphite, 4-nitrosophenol, 2-nitrophenol, p-aminophenol, 4-hydroxy-TEMPO (also known as 4-hydroxy-2,2,6,6, tetramethylpiperidinyloxy, free radical), hydroquinone, p-methoxyhydroquinone, tert-butyl-p-hydroquinone, 2,5-di-tert-butyl-p-hydroquinone, 1,4-naphthalenediol, 4-tert butyl catechol, copper sulfate, copper nitrate, cresol and phenol. When used, the polymerization inhibitors or reducing agents are added in effective amount to substantially stop any polymerization, generally from 25 to 5,000 parts per million ("ppm"), preferably from 50 to 3,500 ppm based on polymer solids. Preferably, the polymerization inhibitor(s) or reducing agent(s) are added while the multistage polymer is at or below the temperature at which the shell was polymerized, most preferably from 0 to 20 °C below the temperature at which the shell was polymerized.

Monomer which is present at, or after providing that no substantial polymerization of monomer is occurring can be (i) one or more of the monomers used to prepare any of the stages of the multistage polymer, (ii) one or more monomers other than those use to prepare any of the stages of the multistage polymer, or (iii) combinations thereof. Preferably, monomer present at such time is one or more of the monomers used to prepare the shell. Such monomer may be unreacted monomer from preparing the multi-stage emulsion polymer, it may be separately added, or a combination thereof. Preferably, the monomer is nonionic monomer. Nonionic monomer is preferred because acid-functional monomers will be neutralized by the swelling agent, and these neutralized monomers are difficult to remove by polymerization. Preferably the level of monomer present at, or after providing that no substantial polymerization of monomer is occurring is from 1 to 20 times as much as the standing monomer level during polymerization.

Hard and soft base qualitatively and quantitatively as described above for the first aspect of the invention and, optionally solvents, are also employed. When trying to maximize the extent of swelling, it is preferable that the one or more swelling agents are added after providing that no substantial polymerization of monomer is occurring. It is also preferable to add the hard and/or soft base to the multistage emulsion polymer while the multistage emulsion polymer is at an elevated temperature, preferably at a temperature within 10°C of the shell polymerization temperature. Swelling is generally very efficient under conditions of elevated temperature, in the presence of monomer and no substantial polymerization occurring. Under these conditions, swelling is generally complete within 30 minutes, preferably within 20 minutes, most preferably within 10 minutes of adding the one or more swelling agents.

When the swollen multistage emulsion polymer of the second aspect of the invention is dried, water and/or swelling agent are removed from the central region of the swollen multistage emulsion polymer, the core tends to shrink and a void develops, the extent of which depends upon the resistance of the shell to restoration to its previous size. This resistance of the shell restoring itself to its previous size is critical for minimizing the dry bulk density of the swollen multistage emulsion polymer. The expansion of the core results in expansion of the shell also. As the size of the shell is restored to its previous size, the dry bulk density increases. It is desirable, therefore, to minimize the extent to which the size of the shell is restored, thereby maximizing the dry bulk density of the swollen multistage emulsion polymer.

This can be accomplished by reducing the monomer level. It is believed that the presence of monomer is helpful in facilitating the swelling of the multistage polymer, whether by plasticizing the shell, aiding in the transport through the shell or a combination thereof. However, the presence of monomer is detrimental when trying to maximize swelling and minimize the dry bulk density of the swollen multistage emulsion polymer. Accordingly, after swelling the multistage emulsion polymer in the presence of both monomer and swelling agent, it is desirable to reduce the level of monomer to less than 10,000 ppm, preferably to less than 5,000 ppm based on polymer solids. This can be accomplished by any suitable means. Preferably, the level of monomer is reduced by polymerizing the monomer. This can be accomplished by any suitable means, such as by adding one or more initiators such as those recited above. It is preferred to begin to reduce the level of monomer within 20 minutes, more preferably within 10 minutes, of adding the one or more swelling agents.

When the swollen multistage emulsion polymers are at least partially dried to produce voided polymer particles, these voided polymer particles impart favorable properties, such as gloss, brightness and opacity to paper coating formulations to which they are added. The voided latex particles produced by the method of the present invention are useful in coating compositions, such as aqueous-based paints. Also, the voided polymer particles produced by the method of this invention impart opacity to aqueous coating compositions, such as paints, to which they are added.

The abbreviations listed below are used throughout the examples.

| MAA | = Methacrylic Acid |
|---|---|
| BMA | = Butyl Methacrylate |
| MMA | = Methyl Methacrylate |
| STY | = Styrene |
| SDS | = Sodium Dodecylbenzenesulfonate |
| DI water | = DI water |

Test Methods

"Dry Bulk Density" or "Dry Density", as used herein, was determined according to the following procedure. To a 50 milliliter ("ml") centrifuge tube was added 6.3 grams of polymer solids. Deionized water was added to the centrifuge tube to provide a total of 35 grams ("g") of material in the centrifuge tube which corresponds to 18 % by weight of polymer solids. The tube was placed in a centrifuge spun at 18,000 revolutions per minute for 120 minutes. The supernatant was decanted and weighed. The dry density was then determined by the following equations:

$$\text{Dry Density} = \%POLY \times d$$

$$\% \ POLY = 1 - \%H2O$$

$$\%H2O = \frac{V\ H2O}{V\ H2O+VP} = \frac{(VT-S\ H2O)\ x\ FR\ -VP}{(VT-\ S\ H2O)\ x\ FR}$$

$$VH2O = (VT - SH2O)\ x\ FR - VP$$

$$VP + V\ H2O = (\ VT - SH2O)\ X\ FR$$

$$FR = \frac{VP+V\ H2O}{V\ P+V\ H2O+I\ H2O} = \frac{VP+V\ H2O}{Hard\ Pack}$$

$$Hard\ Pack = VT - S\ H2O = \frac{VP+V\ H2O}{FR}$$

where:

**WT** = total weight in tube = 35.0 grams
**V H2O** = Volume of water inside the particles
**I H2O** = Interstitial water volume
**d** = polymer density = measured 1.084 g/cc
**V P** = Polymer volume (6.3 g / 1.084 g/cc = 5.81 cc)
**VT** = total volume in tube = 35 g - 6.3 g solids = 28.7g or cc water + 5.81 cc polymer = 34.51 cc
**S H2O** = volume of supernate = weight of supernate
**%H2O** = Percent water inside particles
**% POLY** = Percent polymer in particles
**FR** = Packing constant, which is a correction corresponding to the fraction of volume solids in the hard pack. The following packing constant values were used based on the particle size of the polymer sample:

| Particle Size Range (nm) | FR |
| --- | --- |
| <275 | 0.611 |
| 275 - 500 | 0.624 |
| 501 - 750 | 0.638 |
| 751 - 1300 | 0.645 |

For particle sizes reported herein as >500nm, Fr = 0.638 was used.

The values of the packing constants used were based on density determinations (as described above) for unswollen polymer particles such that V **H2O** is zero. The packing constant, FR is defined as:

$$FR = \frac{VP+V\ H2O}{V\ P+V\ H2O+I\ H2O} = \frac{VP+V\ H2O}{Hard\ Pack} = \frac{VP}{Hard\ Pack}$$

**V P** = Polymer volume (6.3 g / 1.084 g/cc = 5.81 cc)

**I H2O** = Interstitial water volume = (**WT - SH2O** - 6.3 g) / 1.0 g/cc

**WT** = total weight in tube = 35.0 grams

**S H2O** = weight of supernate

Core a Preparation:

A 5-liter, four necked round bottom flask was equipped with paddle stirrer, thermometer, nitrogen inlet, and reflux condenser. DI water, 1720 g, was added to the kettle and heated to 86°C under a nitrogen atmosphere. A monomer emulsion (ME) was prepared by mixing 720 g DI water, 5.2 g of Disponil Fes-993 (30%), 10.0 g MAA, and 780.0 g MMA. From this ME, 164 g were removed and set aside. To the remaining ME was added 54.6 g of Disponil Fes-993 (30%), 380 g MAA, and 130 g MMA. With the kettle water at 86°C, a mixture of 160 g of DI water and 0.40 gram Disponil Fes-993 (30%), followed by the ME removed from the initial ME, followed by a mixture of 5.5 g sodium persulfate in 40 g DI water were added to the kettle. The contents of the kettle were stirred for 15 minutes. The remaining ME was then fed to the kettle over a two hour period at 85°C. After the completion of the monomer feed the dispersion was held at 85°C for 15 minutes, cooled to 25°C and filtered to remove any coagulum. The filtered dispersion had a pH of 3.0, 31.0 % solids content and an average particle size of 185 nm.

COMPARATIVE EXAMPLE A. (Core neutralized with 1.0 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0gram of sodium persulfate dissolved in 75 g of DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 585 g hot DI water was added to the kettle followed by the addition of a solution of 20.9 g 50% sodium hydroxide and 415 g water over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 26.0%, a pH of 7.3, and a particle size of >500 nm. There was <0.1 g coagulum recovered upon filtration. The dry density of the polymer was measured to be 0.603 g/cc.

COMPARATIVE EXAMPLE B. (Core neutralized with 1.05 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 585 g hot DI water was added to the kettle followed by the addition of a solution of 21.9 g 50% sodium hydroxide and 415 g water over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 26.2%, a pH of 7.3, and a particle size of >500 nm. There was 0.3 g coagulum recovered upon filtration. The dry density of the polymer was measured to be 0.5913 g/cc.

COMPARATIVE EXAMPLE C. (Core neutralized with 1.1 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 585 g hot DI water was added to the kettle followed by the addition of a solution of 23.0 g 50% sodium hydroxide and 415 g water over a ten minute period. The reaction mixture was held for 10 minutes at 85°C. After the 10 minute hold a mixture of 1.0 g of sodium persulfate dissolved in 60 g DI water was added to the kettle. The reaction mixture was held for 15 minutes at 85°C and then cooled to room temperature and filtered to remove any coagulum formed. The final latex had a solids content of 26.1%, a pH of 7.5, and a particle size of >500 nm. There was 0.9 g coagulum recovered upon filtration. The dry density of the polymer was measured to be 0.5806 g/cc.

COMPARATIVE EXAMPLE D. (Core neutralized with 1.25 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°C. Upon completion of ME I, a second monomer emulsion (ME II) was prepared by mixing 180 g DI water, 10.0 g SDS(23%), 596.25 g STY, and 3.75 g MAA. The second monomer emulsion (ME II) was then fed to the kettle at a rate of 10 g /minute and a mixture of 1.0gram of sodium persulfate dissolved in 75 g of DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g of 4-hydroxy TEMPO and 8 g of DI water was added to the kettle and the batch was cooled to 85°C. When the reaction mixture reached 85°C, a third monomer emulsion (ME III) prepared by mixing 30 g of DI water, 2.0 g SDS(23%), and 150 g STY, was added to the reactor at a rate of 25 g /minute. When the ME III feed was complete, 585 g of hot DI water was added to the kettle followed by the addition of a solution of 26.2 g of 50% sodium hydroxide and 415 g of water over a ten minute period. The reaction mixture was held for 10 minutes at 85°C. After the 10 minute hold a mixture of 1.0 gram of sodium persulfate dissolved in 60 g of DI water was added to the kettle. The reaction mixture was held for 15 minutes at 85°C and then cooled to room temperature and filtered to remove any coagulum formed. The final latex had a solids content of 25.9%, a pH of 9.0, and a particle size of >500 nm. There was 7.0 g coagulum recovered upon filtration.

The dry density of the polymer was measured to be 0.5707 g/cc.

COMPARATIVE EXAMPLE E. (Core neutralized with 1.50 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g of sodium persulfate dissolved in 40 g of DI water. This was immediately followed by 237.3 g of Core a. A monomer emulsion (ME I) which was prepared by mixing 60 g of DI water, 5.0 g of SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g of DI water, 10.0 g SDS (23%), 596.25 g STY, and 3.75 g MAA. The second monomer emulsion (ME II) was then fed to the kettle at a rate of 10 g /minute and a mixture of 1.0g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 585 g hot DI water was added to the kettle followed by the addition of a solution of 31.3 g 50% sodium hydroxide and 415 g water over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 25.8%, a pH of 12.4, and a particle size of >500 nm. There was 83 g coagulum recovered upon filtration.
The dry density of the polymer was measured to be 0.5698 g/cc.

The data for wet gel (coagulum) formed in the preparation of the multistage emulsion polymer and the dry bulk density for Comparative Examples A-E are presented in Table A-E.

Table A-E.

| Parameters for Comparative Examples A-E | | | | |
|---|---|---|---|---|
| | Moles of base on core acid | | Wet | Dry Density g/cc |
| Example | Na2CO3 | NaOH | Gel (g) | |
| Comp. A | 0 | 1 | trace | 0.603 |
| Comp. B | 0 | 1.05 | 0.3 | 0.5913 |
| Comp.C | 0 | 1.1 | 0.9 | 0.5806 |
| Comp D | 0 | 1.25 | 7 | 0.5707 |
| Comp. E | 0 | 1.5 | 83 | 0.5698 |

In the preparation of multistage particles capable of forming at least one void in the particle, when dry, such as those in Comparative Examples A-E, the higher the extent of neutralization of the core polymer with a hard base, the lower the dry bulk density of the polymer which correlates with increased average void volume in the emulsion polymer particles, but the higher the wet gel content of the multistage emulsion polymer.

EXAMPLE 1. (Core neutralized with 0.25 mole Na2CO3and 1.0 mole NaOH/mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 of SDS(23%), 15.0 g BMA, 132.0 g MMA, and 3.0 g MAA was added to the kettle at a rate of 4.0 g /minute at a temperature of 80°C. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g of DI water, 2.0 g SDS(23%), and 150 g STY, was added to the reactor at a rate of 25 g /minute. When the ME III feed was complete, 400 g hot DI water was added to the kettle followed by the addition of a solution of 6.9 g sodium carbonate dissolved in 185 g water over 5 minutes. A solution of 20.9 g 50% sodium hydroxide and 415 g water was then added to the kettle over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 25.8%, a pH of 8.8, and a particle size of >500 nm. There was 0.6 g coagulum recovered upon filtration. The dry density of the polymer was measured to be 0.5747 g/cc.

EXAMPLE 2. (Core neutralized with 0.25 mole Na2CO3and 1.05 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle followed by the addition of a solution of 6.9 g sodium carbonate dissolved in 185 g water over 5 minutes. A solution of 21.9 g 50% sodium hydroxide and 415 g water was then added to the kettle over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 26.0%, a pH of 9.2, and a particle size of >500 nm. There was 0.9 g coagulum recovered upon filtration. The dry density of the polymer was measured to be 0.5631 g/cc.

EXAMPLE 3. (Core neutralized with 0.25 mole $Na_2CO_3$ and 1.10 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°C. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle followed by the addition of a solution of 6.9 g sodium carbonate dissolved in 185 g water over 5 minutes. A solution of 23.0 g 50% sodium hydroxide and 415 g water was then added to the kettle over a ten minute period. The reaction mixture was held for 10 minutes at 85°C. After the 10 minute hold a mixture of 1.0 gram of sodium persulfate dissolved in 60 g of DI water was added to the kettle. The reaction mixture was held for 15 minutes at 85°C and then cooled to room temperature and filtered to remove any coagulum formed. The final latex had a solids content of 26.3%, a pH of 9.9, and a particle size of >500 nm. There was 0.4 g coagulum recovered upon filtration. The dry density of the polymer was measured to be 0.5743 g/cc.

EXAMPLE 4. (Core neutralized with 0.125 mole $Na_2CO_3$ and 1.0 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle followed by the addition of a solution of 3.5 g sodium carbonate dissolved in 185 g water over 5 minutes. A solution of 20.9 g 50% sodium hydroxide and 415 g water was then added to the kettle over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 25.8%, a pH of 8.3, and a particle size of >500 nm. There was 0.3 g coagulum recovered upon filtration. The dry density of the polymer was measured to be 0.5816 g/cc.

EXAMPLE 5. (Core neutralized with 0.375 mole Na2CO3 and 1.0 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle followed by the addition of a solution of 10.4 g sodium carbonate dissolved in 185 g water over 5 minutes. A solution of 20.9 g 50% sodium hydroxide and 415 g water was then added to the kettle over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 26.5%, a pH of 9.8, and a particle size of>500 nm. There was 5.6 g coagulum recovered upon filtration. The dry density of the polymer was measured to be 0.6026 g/cc.

The data for wet gel (coagulum) formed in the preparation of the multistage emulsion polymer and the dry bulk density for Examples 1-4 are presented in Table 1-4.

Table 1-5.

| Parameters for Examples 1-5 and Comparative Examples D-E | | | | |
|---|---|---|---|---|
| | Moles of base on core acid | | Wet | Dry Density g/cc |
| Example | Na2CO3 | NaOH | Gel (g) | |
| 1 | 0.25 | 1 | 0.6 | 0.5741 |
| 2 | 0.25 | 1.05 | 0.9 | 0.5631 |
| 3 | 0.25 | 1.1 | 0.4 | 0.5743 |
| 4 | 0.125 | 1 | 0.27 | 0.5816 |
| 5 | 0.375 | 1 | 5.6 | 0.6026 |
| Comp D | 0 | 1.25 | 7 | 0.5707 |
| Comp E | 0 | 1.5 | 83 | 0.5698 |

In the preparation of multistage particles capable of forming at least one void in the particle, when dry, such as those in Examples 1-5 of the present invention, neutralization of the core polymer with a hard base and a soft base provides useful dry bulk density of the polymer which correlates with increased average void volume in the emulsion polymer particles and desirably low wet gel formation. Example 1 of the present invention provides a dry bulk density comparable to that for Comparative Example D at the same overall composition and total base level along with substantially improved and desirably low wet gel formation.

COMPARATIVE EXAMPLE F (Core neutralized with 0.25 mole Na2CO3 /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g of 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 815 g hot DI water was added to the kettle followed by the addition of a solution of 6.9 g sodium carbonate dissolved in 185 g water over 5 minutes. The reaction mixture was held for 10 minutes at 85°C. After the 10 minute hold a mixture of 1.0 gram of sodium persulfate dissolved in 60 g DI water was added to the kettle. The reaction mixture was held for 15 minutes at 85°C and then cooled to room temperature and filtered to remove any coagulum formed. The final latex had a solids content of 25.9%, a pH of 8.2, and a particle size of >500 nm. There was <0.1 g coagulum recovered upon filtration. The dry density of the polymer was measured to be 1.0538 g/cc.

COMPARATIVE EXAMPLE G (Core neutralized with 0.50 mole Na2CO3 /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 815 g hot DI water was added to the kettle followed by the addition of a solution of 13.8 g sodium carbonate dissolved in 185 g water over 5 minutes. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 26.1%, a pH of 8.5, and a particle size of >500 nm. There was 24.4 g coagulum recovered upon filtration. The dry density of the polymer was measured to be 0.909 g/cc.

The data for wet gel (coagulum) formed in the preparation of the multistage emulsion polymer and the dry bulk density for Comparative Examples F-G are presented in Table F-G.

Table F-G.

| Parameters for Comparative Examples F-G | | | | |
|---|---|---|---|---|
| | Moles of base on core acid | | Wet | Dry Density g/cc |
| Example | Na2CO3 | NaOH | Gel (g) | |
| Comp. F | 0.25 | 0 | <0.1 | 1.0538 |
| Comp G | 0. 5 | 0 | 24.4 | 0.909 |

In the preparation of multistage particles capable of forming at least one void in the particle, when dry, such as those in Comparative Examples F-G, neutralization of the core polymer with only a soft base provides a very high dry bulk density of the polymer indicative of little-no void volume in the emulsion polymer particles and wet gel formation which is unacceptably high for Comparative Exxample G.

EXAMPLE 6. (Core neutralized with 1.0 mole NaOH and 0.25 mole Na2CO3/mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g/minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle followed by the addition of a solution of 20.9 g 50% sodium hydroxide and 415 g water over 10 minutes. A solution of 6.9 g sodium carbonate dissolved in 185 g water was then added to the kettle over 5 minutes. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 25.9%, a pH of 8.9, and a particle size of >500 nm. There was 0.2 g coagulum recovered upon filtration. The dry density of the polymer was measured to be 0.0.5620 g/cc.

EXAMPLE 7. (Core neutralized with 1.0 mole NaOH and 0.25 mole Na2CO3 mixed together /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g of SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 596.3 g STY, and 3.75 g MAA. The second monomer emulsion (ME II) was then fed to the kettle at a rate of 10 g /minute and a mixture of 1.0gram of sodium persulfate dissolved in 75 g of DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 400 g hot DI water was added to the kettle. This was followed by the addition of a mixed base solution of 20.9 g 50% sodium hydroxide in 600 g water and 6.9 g sodium carbonate over 15 minutes. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 25.6%, a pH of 9.1, and a particle size of >500 nm. There was 0.25 g coagulum recovered upon filtration. The dry density of the polymer was measured to be 0.5626 g/cc.

The data for wet gel (coagulum) formed in the preparation of the multistage emulsion polymer and the dry bulk density for Examples 6-7 are presented in Table 1.

Table 6-7.

| Parameters for Examples 6-7 | | | | |
|---|---|---|---|---|
| | Moles of base on core acid | | Wet | Dry Density g/cc |
| Example | Na2CO3 | NaOH | Gel (g) | |
| 6 | 0.25 | 1 | 0.2 | 0.562 |
| 7 | 0.25 | 1 | 0.25 | 0.5626 |

In the preparation of multistage particles capable of forming at least one void in the particle, when dry, such as those in Examples 6-7 of the present invention, neutralization of the core polymer with only a hard base and a soft base provides useful dry bulk density of the polymer indicative of high void volume in the emulsion polymer particles and desirably low wet gel formation independent of whether the NaOH was added first (Example 6) or the hard and soft bases mixed together before addition (Example 7).

EXAMPLE 8. (Core neutralized with 0.25 mole Na2CO3and 1.0 mole NaOH/mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of the Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 591.0 g STY, and 9.0 g MAA. The second monomer emulsion (ME II) was then fed to the kettle at a rate of 10 g /minute and a mixture of 1.0 g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete a solution of 6.9 g sodium carbonate dissolved in 185 g water was added to the kettle over 5 minutes. A solution of 20.9 g 50% sodium hydroxide and 415 g water was then added to the kettle over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 29.7%, a pH of 8.5, and a particle size of 372 nm. There was 0.12 g coagulum recovered upon filtration. The dry density of the polymer was measured to be 0.6156 g/cc.

EXAMPLE 9 (Core neutralized with 0.375 mole Na2CO3 and 1.0 mole NaOH/mole core acid):

A 5-liter, four necked round bottom flask was equipped with paddle stirrer, thermometer, nitrogen inlet, and reflux condenser. DI water, 1000 g, was added to the kettle and heated to 88 °C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g of SDS(23%), 15.0 g BMA, 132.0 g MMA, and 3.0 g MAA was added to the kettle at a rate of 4.0 g /min at 80 °C. Upon completion of ME I, a second monomer emulsion (ME II) was prepared by mixing 180 g DI water, 10.0 g SDS(23%), 591.0 g STY, and 9.0 g MAA. The second monomer emulsion (ME II) was then fed to the kettle at a rate of 10 g /min and a mixture of 1.0 g sodium persulfate dissolved in 75 g DI water was co-fed to the reactor at a rate of 1.8 g/min. After 15 minutes, the feed rate for ME II was increased to 20 g/min. The temperature of the reaction mixture was allowed to increase to 92 °C. Upon completion of the ME II and co-feeds a mixture of 8 g 4-hydroxy TEMPO and 8 g DI water was added to the kettle and the batch was cooled to 85 °C. When the reaction mixture reached 85 °C, a third monomer emulsion (ME III) prepared by mixing 30 g DI water, 2.0 g SDS(23%), and 150 g STY, was added to the reactor at a rate of 25 g /min. When the ME III feed was complete a solution of 10.4 g sodium carbonate dissolved in 335 g water was added to the kettle over 5 minutes. A solution of 20.9 g 50% sodium hydroxide and 415 g water was then added to the kettle over a ten minute period. The reaction mixture was held for 10 minutes at 85 °C. A mixture of 1.0 g sodium persulfate dissolved in 60 grams of deionized water was added to the kettle. The reaction mixture was held for 15 minutes at 85 °C and then cooled to room temperature and filtered to remove any coagulum formed. The final latex had a solids content of 27.9%, a pH of 9.2, and a particle size of 590 nm. There was 0.40 grams coagulum recovered upon filtration. The dry density of the polymer was measured to be 0.5906 g/cc.

EXAMPLE 10 (Core neutralized with 0.50 mole of Na2CO3 and 1.0 mole NaOH/mole core acid):

A 5-liter, four necked round bottom flask was equipped with paddle stirrer, thermometer, nitrogen inlet, and reflux condenser. DI water, 1000 g, was added to the kettle and heated to 88 °C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /min at 80 °C. Upon completion of ME I, a second monomer emulsion (ME II) was prepared by mixing 180 g DI water, 10.0 g SDS(23%), 591.0 g STY, and 9.0 g MAA. The second monomer emulsion (ME II) was then fed to the kettle at a rate of 10 g /min and a mixture of 1.0 g sodium persulfate dissolved in 75 g DI water was co-fed to the reactor at a rate of 1.8 g/min. After 15 minutes, the feed rate for ME II was increased to 20 g/min. The temperature of the reaction mixture was allowed to increase to 92 °C. Upon completion of the ME II and co-feeds a mixture of 8 g 4-hydroxy TEMPO and 8 g DI water was added to the kettle and the batch was cooled to 85 °C. When the reaction mixture reached 85 °C, a third monomer emulsion (ME III) prepared by mixing 30 g of DI water, 2.0 g SDS(23%), and 150 g STY, was added to the reactor at a rate of 25 g /min. When the ME III feed was complete, a solution of 13.8 g sodium carbonate dissolved in 335 g water was added to the kettle over 5 minutes. A solution of 20.9 g 50% sodium hydroxide and 415 g water was then added over a ten minute period. The reaction mixture was held for 10 minutes at 85 °C. A mixture of 1.0 g sodium persulfate dissolved in 60 g DI water was added to the kettle. The reaction mixture was held for 15 minutes at 85 °C and then cooled to room temperature and filtered to remove any coagulum formed. The final latex had a solids content of 28.0%, a pH of 9.7, and a particle size of 625 nm. There was 2.3 grams coagulum recovered upon filtration. The dry density of the polymer was measured to be 0.5787 g/cc.

COMPARATIVE EXAMPLE H. (Core neutralized with 1.25 mole NaOH /mole core acid):

A 5-liter, four necked round bottom flask was equipped with paddle stirrer, thermometer, nitrogen inlet, and reflux condenser. DI water, 1000 g, was added to the kettle and heated to 88°C under a nitrogen atmosphere. To the heated kettle water was added 4.0 g sodium persulfate dissolved in 40 g DI water. This was immediately followed by 237.3 g of Core a. A monomer emulsion (ME I) which was prepared by mixing 60 g DI water, 5.0 g SDS(23%), 15.0 g BMA, 132.0 g MMA, and 3.0 g MAA was added to the kettle at a rate of 4.0 g /minute at a temperature of 80°. Upon completion of ME I, a second monomer emulsion (ME II) was prepared by mixing 180 g DI water, 10.0 g SDS(23%), 591.0 g STY, and 9.0 g MAA. The second monomer emulsion (ME II) was then fed to the kettle at a rate of 10 g /minute and a mixture of 1.0g sodium persulfate dissolved in 75 g DI water was co-fed to the reactor at a rate of 1.8 g/minute. After 15 minutes, the feed rate for ME II was increased to 20 g/minute. The temperature of the reaction mixture was allowed to increase to 92°C. Upon completion of the ME II and co-feeds a mixture of 8 g 4-hydroxy TEMPO and 8 g DI water was added to the kettle and the batch was cooled to 85°C. When the reaction mixture reached 85°C, a third monomer emulsion (ME III) prepared by mixing 30 g DI water, 2.0 g SDS(23%), and 150 g STY, was added to the reactor at a rate of 25 g /minute. When the ME III feed was complete, 185 g hot DI water was added to the kettle followed by the addition of a solution of 26.2 g 50% sodium hydroxide and 415 g water over a ten minute period. The reaction mixture was held for 10 minutes at 85°C. After the 10 minute hold a mixture of 1.0 g sodium persulfate dissolved in 60 g DI water was added to the kettle. The reaction mixture was held for 15 minutes at 85°C and then cooled to room temperature and filtered to remove any coagulum formed. The final latex had a solids content of 31.2%, a pH of 8.3, and a particle size of 424 nm. There was 5.5 g coagulum recovered upon filtration. The dry density of the polymer was measured to be 0.6038 g/cc.

The data for wet gel (coagulum) formed in the preparation of the multistage emulsion polymer and the dry bulk density for Examples 8-10 and Comparative Example H are presented in Table 8-10.

Table 8-10.

| Parameters for Examples 8-10 and Comparative Example H | | | | |
|---|---|---|---|---|
| | Moles of base on core acid | | Wet | Dry Density g/cc |
| Example | Na2CO3 | NaOH | Gel (g) | |
| 8 | 0.25 | 1 | 0.12 | 0.6156 |
| 9 | 0.375 | 1.0 | 0.40 | 0.5906 |
| 10 | 0.50 | 1.0 | 2.3 | 0.5787 |
| Comp H | 0 | 1.25 | 5.5 | 0.6038 |

Examples 8-10 of the present invention provides a dry bulk density comparable to or superior to that for Comparative Example H at the same overall composition along with substantially improved and desirably low wet gel formation.

**Claims**

**1.** A process for preparing emulsion polymer particles comprising:

a) forming a multi-stage emulsion polymer, comprising a core stage polymer and a shell stage polymer, wherein the core stage polymer comprises, as polymerized units, from 5 to 100% by weight, based on the weight of the core stage polymer, of hydrophilic monoethylenically unsaturated monomer, and from 0 to 95% by weight, based on the weight of the core stage polymer, of at least one nonionic monoethylenically unsaturated monomer; and
wherein the shell stage polymer comprises, as polymerized units, at least 50% by weight of nonionic monoethylenically unsaturated monomer; and
b) contacting the multi-stage emulsion polymer with from 0.75 to 1.5 moles hard base per mole of the core polymer acid and from 0.05 to 0.5 moles soft base per mole of the core polymer acid.

**2.** The process of claim 1 wherein the the multi-stage emulsion polymer is contacted with from 0.75 to 1.5 moles hard base per mole of the core polymer acid and from 0.1 to 0.3 moles soft base per mole of the core polymer acid.

3. A process for preparing emulsion polymer particles comprising:

a) forming a multi-stage emulsion polymer, comprising a core stage polymer and a shell stage polymer, wherein the core stage polymer comprises, as polymerized units, from 5 to 100% by weight, based on the weight of the core stage polymer, of hydrophilic monoethylenically unsaturated monomer, and from 0 to 95% by weight, based on the weight of the core stage polymer, of at least one nonionic monoethylenically unsaturated monomer; and
wherein the shell stage polymer comprises, as polymerized units, at least 50% by weight of nonionic monoethylenically unsaturated monomer;
b) adding an effective amount of one or more polymerization inhibitors or reducing agents to substantially stop any polymerization;
c) providing monomer at a level of at least 0.5% by weight based on the weight of the multi-stage emulsion polymer;
d) adding from 0.75 to 1.5 moles hard base per mole of the core polymer acid and from 0.05 to 0.5 moles soft base per mole of the core polymer acid; and
e) reducing the level of monomer by at least 50% by weight.

4. The process of claim 3 wherein step d) comprises adding from 0.75 to 1.5 moles hard base per mole of the core polymer acid and from 0.1 to 0.3 moles soft base per mole of the core polymer acid

5. A core/shell polymer particle formed by the process of claim 1 or claim 2 or claim 3 or claim 4, the particle containing, when dry, at least one void.

**European Patent Office**

## PARTIAL EUROPEAN SEARCH REPORT

Application Number

which under Rule 45 of the European Patent Convention EP 02 25 8968
shall be considered, for the purposes of subsequent
proceedings, as the European search report

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 321 096 A (TIOXIDE GROUP PLC) 21 June 1989 (1989-06-21) * the whole document * | 1-5 | C08F265/02 C08F267/02 C08F267/04 |
| A | EP 1 192 930 A (OREAL) 3 April 2002 (2002-04-03) * the whole document * | 1-5 | |

TECHNICAL FIELDS
SEARCHED    (Int.Cl.7)

C08F

### INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 28 April 2003 | Rouault, Y |

EPO FORM 1503 03.82 (P04C07)

European Patent
Office

INCOMPLETE SEARCH
SHEET C

Application Number

EP 02 25 8968

Claim(s) searched incompletely:
    1-5

Reason for the limitation of the search:

Present claims relate to an extremely large number of possible compounds.
Support within the meaning of Article 84 EPC and disclosure within the
meaning of Article 83 EPC is to be found, however, for only a very small
proportion of the compounds claimed.
A confusion in the wording has been made between "hydrophilic" monomers
and "acid" monomers. If the acid monomers are hydrophilic, the opposite
is not true, many hydrophilic monomers are not acid.
In the present case, the claims so lack support, and the application so
lacks disclosure, that a meaningful search over the whole of the claimed
scope is impossible. Consequently, the search has been carried out for
those parts of the claims which appear to be supported and disclosed,
namely those parts relating to the compounds including acid monomers.

**ANNEX TO THE EUROPEAN SEARCH REPORT
ON EUROPEAN PATENT APPLICATION NO.**

EP 02 25 8968

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2003

| Patent document cited in search report | | Publication date | Patent family member(s) | | Publication date |
|---|---|---|---|---|---|
| EP 0321096 | A | 21-06-1989 | AU | 2575488 A | 29-06-1989 |
| | | | BR | 8806591 A | 22-08-1989 |
| | | | CA | 1299451 A1 | 28-04-1992 |
| | | | DE | 3851132 D1 | 22-09-1994 |
| | | | DE | 3851132 T2 | 01-12-1994 |
| | | | DK | 699688 A | 19-06-1989 |
| | | | EP | 0321096 A2 | 21-06-1989 |
| | | | ES | 2058311 T3 | 01-11-1994 |
| | | | FI | 885842 A ,B, | 18-06-1989 |
| | | | FR | 2624869 A1 | 23-06-1989 |
| | | | GB | 2213826 A ,B | 23-08-1989 |
| | | | JP | 1201313 A | 14-08-1989 |
| | | | JP | 2634214 B2 | 23-07-1997 |
| | | | US | 4985469 A | 15-01-1991 |
| | | | US | 5036109 A | 30-07-1991 |
| | | | ZA | 8808850 A | 30-08-1989 |
| EP 1192930 | A | 03-04-2002 | FR | 2814673 A1 | 05-04-2002 |
| | | | EP | 1192930 A1 | 03-04-2002 |
| | | | JP | 2002145726 A | 22-05-2002 |
| | | | US | 2002061319 A1 | 23-05-2002 |

EPO FORM P0459

For more details about this annex : see Official Journal of the European Patent Office, No. 12/82